# EUROPÄISCHE PATENTANMELDUNG

(11) **EP 2 562 380 A2**
(43) Veröffentlichungstag der Anmeldung: **27.02.2013**
(21) Anmeldenummer: 12178560.4
(22) Anmeldetag: 30.07.2012
(51) Int. Cl.: F02B 29/04

(54) **Wärmetauschersystem und Verfahren zum Betreiben eines Wärmetauschersystems für ein Fahrzeug**

(30) Priorität: 01.08.2011 DE 102011080208
(71) Anmelder: Behr GmbH & Co. KG, 70469 Stuttgart (DE)
(72) Erfinder: Diem, Johannes, 71287 Weissach (DE); Haßdenteufel, Klaus, 70839 Gerlingen (DE); Hofmann, Herbert, 70376 Stuttgart (DE); Müller, Rolf, 71711 Steinheim (DE); Nguyen, Chi-Duc, 70619 Stuttgart (DE)
(74) Vertreter: Grauel, Andreas

(57) **Zusammenfassung**

Die vorliegende Erfindung betrifft ein Wärmetauschersystem für ein Fahrzeug, das einen Verteiler (102) zum Aufteilen eines Kühlmiflelstroms in einen ersten Kühlmittelstrom und einen zweiten Kühlmittelstrom, einen durch den ersten Kühtmittelstrom kühlbaren Ladeluftkühler (104) für einen Motor (114) des Fahrzeugs, einen durch den zweiten Kühlmittelstrom kühlbaren Kondensator (106) und einen Regler (108) zum Regeln eines Massenstroms des ersten Kühlmittelstroms durch den Ladeluftkühler aufweist.

## Beschreibung

Die vorliegende Erfindung bezieht sich auf ein Wärmetauschersystem und auf ein Verfahren zum Betreiben eines Wärmetauschersystems für ein Fahrzeug.

In einem Fahrzeug können unterschiedliche Kühlkreisläufe eingesetzt werden. Ein Ladeluftkühler eines Motors und ein Kondensator einer Klimaanlage des Fahrzeugs können von einem Kühlmittel eines Niedertemperatur-Kühlkreislaufs des Fahrzeugs gekühlt werden. Dabei stehen der Ladeluftkühler und der Kondensator jedoch in Konkurrenz um kaltes Kühlmittel.

Es ist die Aufgabe der vorliegenden Erfindung ein verbessertes Wärmetauschersystem und ein verbessertes Verfahren zum Betreiben eines Wärmetauschersystems für ein Fahrzeug zu schaffen.

Diese Aufgabe wird durch ein Wärmetauschersystem und ein Verfahren zum Betreiben eines Wärmetauschersystems für ein Fahrzeug gemäß den Hauptansprüchen gelöst.

Der vorliegenden Erfindung liegt die Erkenntnis zugrunde, dass sich eine Konkurrenzsituation eines indirekten Ladeluftkühlers (iCAC) und eines indirekten Kondensators (iCond) um ein gemeinsames Kühlmittel durch eine effiziente Verschaltung von dem Ladeluftkühler und dem Kondensator entschärfen lässt.

Eine solche effiziente Verschaltung lässt sich bei der Parallelverschaltung des indirekten Ladeluftkühlers und des indirekten Kondensators einsetzen. Sind der indirekte Ladeluftkühler und der indirekte Kondensator beispielsweise im Niedertemperatur-Kühlkreislauf angeordnet, so stehen die beiden Komponenten im Wettbewerb um kaltes Kühlmittel des Niedertemperatur-Kühlkreislaufs. Durch eine geeignete Regelung kann gewährleistet werden, dass beiden Komponenten im Betrieb eine ausreichende Menge an kaltem Kühlmittel zur Verfügung steht.

Die vorliegende Erfindung schafft ein Wärmetauschersystem für ein Fahrzeug, mit folgenden Merkmalen:
einem Verteiler zum Aufteilen eines Kühlmittelstroms in einen ersten Kühlmittelstrom und einen zweiten Kühlmittelstrom;
einem durch den ersten Kühlmittelstrom kühlbaren ladeluftkühler für einen Motor des Fahrzeugs;
einem durch den zweiten Kühlmittelstrom kühlbaren Kondensator; und
einem Regler zum Regeln eines Massenstroms des ersten Kühlmittelstroms durch den Ladeluftkühler.

Bei dem Fahrzeug kann es sich um ein Kraftfahrzeug, beispielsweise einen Personenkraftwagen oder einen Lastkraftwagen, handeln. Das Wärmetauschersystem kann Teil eines Kühlkreislaufs des Fahrzeugs sein, beispielsweise Teil eines Niedertemperaturkreislaufs. Der erste Kühlmittelstrom kann von einem ersten Ausgang des Verteilers über eine Leitung zu einem Eingang des Ladeluftkühlers geführt werden. Der zweite Kühlmittelstrom kann von einem zweiten Ausgang des Verteilers über eine weitere Leitung zu einem Eingang des Kondensators geführt werden. Somit sind der Ladeluftkühler und der Kondensator in dem Wärmeübertragersystem parallel verschaltet. Der Kondensator kann als indirekter Kondensator und der Ladeluftkühler als indirekter Ladeluftkühler ausgeführt sein. Der Kondensator kann Teil einer Klimaanlage des Fahrzeugs sein. Der Ladeluftkühler kann ausgebildet sein, um Ladeluft für den Motor des Fahrzeugs, insbesondere einen Verbrennungsmotor des Fahrzeugs, zu kühlen. Mittels des Reglers kann eine Menge des durch den Ladeluftkühler strömenden Kühlmittels eingestellt werden. Strömt durch den Ladeluftkühler kein oder nur wenig Kühlmittel, so steht mehr Kühlmittel für den Kondensator zur Verfügung.

Eine einfache und effiziente Lösung für eine solche Regelung ist ein austrittseitiges Thermostat am indirekten Ladeluftkühler, welches schließt, wenn keine Ladeluftkühlung erforderlich ist, also bei Teillast und Leerlauf, und öffnet, wenn die Ladeluft gekühlt werden soll. Für den indirekten Ladeluftkühler bedeutet dies vollen Kühlmittelmassenstrom im Teillast- und Leerlaufbetrieb - ideal für die Kabinenabkühlung (cool down) des Fahrzeugs. Vorteil des austrittsseitigen Thermostats am indirekten Ladeluftkühler ist, dass In den Betriebsfällen Leerlauf und Teillast des Motors, der Kühler des Kühlkreislaufs, beispielsweise der Niedertemperaturkühler, ausschließlich für den indirekten Kondensator zur Verfügung steht. Dadurch ergibt sich ein Verbrauchsvodeil für das Fahrzeug (NEFZ-Realbetrieb mit Klimatisierung). Im Vollastbetrieb steht dennoch eine ausreichende Kühlung der Ladeluft zur Verfügung.

Eine weitere Lösung ist eine Aufteilung des Kondensators in zwei Einheiten, wobei einer der Einheiten das Kühlmittel direkt und der anderen der Einheiten das Kühlmittel über den Ladeluftkühler zugeführt wird. Eine Regelung des Kühlmittelstroms durch den Ladeluftkühler kann hierbei über den Ladedruck des Motors erfolgen. Im Falle der Aufteilung des Kondensators kann die Verschlauchung des Kondensators aufwendiger werden. Dafür ist es nicht erforderlich, eine Androsselung (Pumpenleistung) des Kühlkreislaufes vorzunehmen.

Somit kann der Regler gemäß einer Ausführungsform ausgebildet sein, um eine Temperatur des ersten Kühlmittelstroms ausgangsseitig des Ladeluftkühlers zu erfassen und den Massenstrom des ersten Kühlmittelstroms durch den Ladeluftkühler abhängig von der Temperatur zu regeln. Eine solche temperaturgesteuerte Regelung ist einfach und kostengünstig zu realisieren.

Hierbei kann der Regler ausgebildet sein, um den Massenstrom des ersten Kühlmittelstroms bei einer steigenden Temperatur zu erhöhen. Die steigende Temperatur deutet auf einen erhöhten Kühlmittelbedarf des Ladeluftkühlers hin, der durch die Erhöhung des Massenstroms gedeckt werden kann. Bei einer sinkenden Temperatur kann der Massenstrom durch den Regler reduziert werden. Beispielsweise kann der Regler ausgebildet sein, um den Massenstrom innerhalb eines vorgebbaren oder festeingestellten Temperaturintervalls bei einer Temperaturänderung kontinuierlich zu ändern. Bei einer Überschreitung einer ersten Temperatur kann der Regler ausgebildet sein, um einen maximalen Massestrom zu ermöglichen. Entsprechend kann der Regler ausgebildet sein, um bei einer Unterschreitung einer zweiten Temperatur, die niedriger als die erste Temperatur ist, einen minimalen oder gar keinen Massestrom des ersten Kühlmittels zu ermöglichen.

Der Regler kann ein Thermostat sein. Der Regler kann im Ladeluftkühler integriert sein. Alternativ kann der Regler auch getrennt von dem Ladeluftkühler in einer Ausgangsleitung des Ladeluftkühlers angeordnet sein. Auf diese Weise kann eine Position des Reglers entsprechend der jeweiligen Gegebenheiten relativ frei gewählt werden.

Ferner kann das Wärmetauschersystem einen von einem weiteren Kühlmittelstrom gekühlten Ladeluftkühler aufweisen, der in Strömungsrichtung einer durch den Ladeluftkühler und den weiteren Ladeluftkühler strömenden Ladeluft vor dem von dem ersten Kühlmittelstrom gekühlten Ladeluftkühler angeordnet ist. Dadurch kann eine kaskadierte Ladeluftkühlung realisiert werden. Der weitere Kühlmittelstrom kann von einem Hochtemperatur-Kühlkreislauf stammen. Der weitere Ladeluftkühler kann somit eine Vorkühlung der Ladeluft vornehmen, wodurch der Bedarf an Kühlmittel für den von dem ersten Kühlmittelstrom durchströmten Ladeluftkühler sinkt. Dies bewirkt, dass für den Kondensator mehr Kühlleistung zur Verfügung steht.

Gemäß einer Ausführungsform kann das Wärmetauschersystem einen durch den ersten Kühlmittelstrom gekühlten weiteren Kondensator aufweisen. Der weitere Kondensator kann ausgangsseitig des Ladeluftkühlers angeordnet sein. Somit kann eine Serienschaltung aus dem von dem ersten Kühlmittelstrom durchflossenen Ladeluftkühler und dem weiterem Kondensator parallel zu dem von dem zweiten Kühlmittelstrom durchflossene Kondensator geschaltet sein. Die beiden Kondensatoren können als eine Einheit realisiert sein, die kühlmittelseitig eine Trennung zwischen dem ersten und dem zweiten Kühlmittelstrom aufweist. Eine solche Einheit kann als Stapelscheibenkondensator realisiert sein.

Der Regler kann ausgebildet sein, um eine information über einen Betriebszustand des Motors zu empfangen. Der Regler kann ferner ausgebildet sein, um die Durchflussmenge des ernsten Kühlmittels durch den Ladeluftkühler bei einem Vollastbetrieb des Motors zu erhöhen und bei einem Teillastbetrieb oder einem Leerlauf des Motors zu senken. Dadurch kann die dem Ladeluftkühler zugeführte Kühlmittelmenge an den tatsächlichen aktuellen Bedarf des Ladeluftkühlers angepasst werden.

Insbesondere kann der Regler ausgebildet sein, um den Massenstrom des ersten Kühlmittelstroms durch den Ladeluftkühler abhängig von einem Ladedruck des Motors zu regeln. Der Ladedruck ist ein geeignetes Maß zur Bestimmung einer erforderlichen Kühlleistung des Ladeluftkühlers. Der Ladedruck kann mittels eines Ladedrucksensors erfasst werden. Der Regler kann ausgebildet sein, um den ersten Kühlmittelstrom ansprechend auf den erfassten Ladedruck einzustellen. Auch kann der Regler als ein Druckventil ausgeformt sein.

Die vorliegende Erfindung schafft ferner ein Verfahren zum Betreiben eines Wärmetauschersystems für ein Fahrzeug, das die folgenden Schritte umfasst:
Aufteilen eines Kühlmittelstroms in einen ersten Kühlmittelstrom und einen zweiten Kühlmittelstrom;
Leiten des ersten Kühlmittelstroms durch einen durch den ersten Kühlmittelstrom gekühlten Ladeluftkühler für einen Motor des Fahrzeugs;
Leiten des zweiten Kühlmittelstroms durch einen durch den zweiten Kühlmittelstrom gekühlten Kondensator; und
Regeln des ersten Kühlmittelstroms durch den Ladeluftkühler.

Vorteilhafte Ausführungsbeispiele der vorliegende Erfindung werden nachfolgend Bezug nehmend auf die beiliegenden Zeichnungen näher erläutert. Es zeigen:
- Fig. 1: eine Darstellung eines erfindungsgemäßen Wärmetauschersystems; und
- Fig. 2: eine Darstellung eines weiteren erfindungsgemäßen Wärmetauschersystems.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

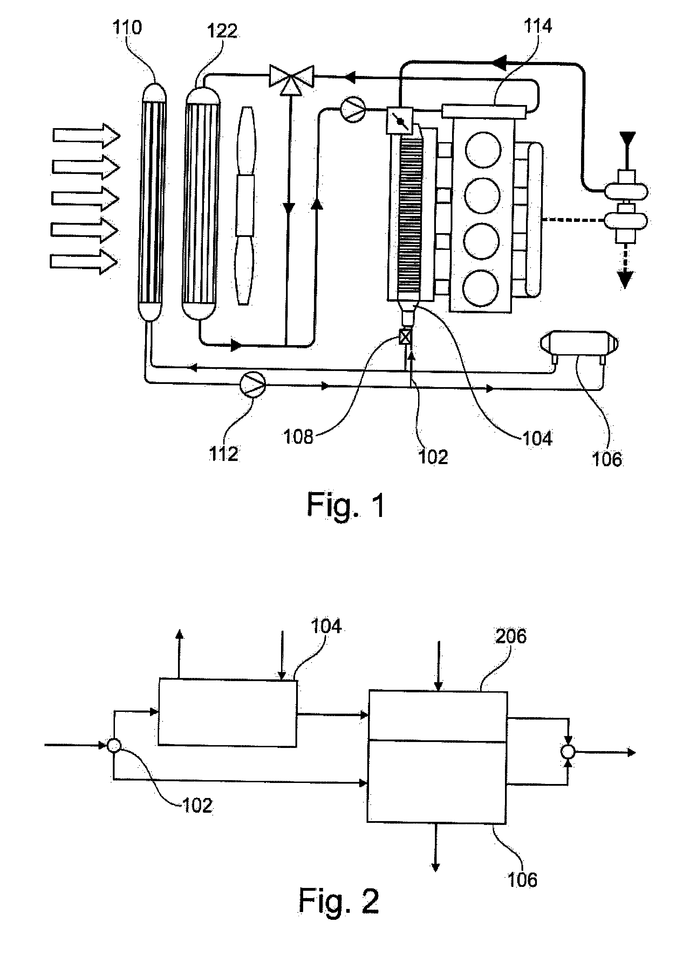

Fig. 1 zeigt einen Niedertemperatur-Kühlkreislauf eines Fahrzeugs, der ein Wärmetauschersystem gemäß einem Ausführungsbeispiel der vorliegende Erfindung umfasst. Neben dem Niedertemperatur-Kühlkreislauf ist ein Hochtemperatur-Kreislauf des Fahrzeugs gezeigt.

Das Wärmetauschersystem umfasst einen Verteiler 102, einen indirekten Ladeluftkühler i²CAC 104, einen indirekten Kondensator iCond 106 und einen Regler 108. Der Ladeluftkühler 104 und der Kondensator 106 sind in dem Niedertemperatur-Kühlkreislauf parallel geschaltet. Der Niedertemperatur-Kühlkreislauf weist ferner einen Niedertemperatur-Kühler 110 und eine Niedertemperatur-Pumpe 112 auf. Angetrieben durch die Pumpe 112 strömt ein Kühlmittels durch die Leitungen des Niedertemperatur-Kühlkreislaufs. In Strömungsrichtung nach der Pumpe 112 wird ein Anteil des Kühlmittels von dem Verteiler 102 zu dem Ladeluftkühler 104 und ein übriger Teil des Kühlmittels zu dem Kondensator 106 geführt. Eine Größe des zu dem Ladeluftkühler 104 geführten Anteils des Kühlmittels wird durch den Regler 108 in Form eines Thermostats geregelt. Der Regler 108 ist ausgebildet, um eine Durchflussmenge des Kühlmittels abhängig von einer Temperatur des Kühlmittels im Bereich des Reglers 108 zu regeln. Der Regler 108 ist in einer Ausgangsleitung des Ladeluftkühler 104 angeordnet, so dass der durch den Ladeluftkühler 104 strömende Anteil des Kühlmittels zuerst durch den Ladeluftkühler 104 und anschließend durch den Regler 108 strömt. In Strömungsrichtung nach dem Regler 108 wird das Kühlmittel mit dem durch den Kondensator 106 geströmten Kühlmittel zusammengeführt und strömt anschließend durch den Kühler 110 in dem es abgekühlt wird.

Der Ladeluftkühler 104 ist ausgebildet, um mittels des Kühlmittels durch den Ladeluftkühler 104 strömende Ladeluft für einen Motor 114 des Fahrzeugs abzukühlen. Gemäß diesem Ausführungsbeispiel handelt es sich bei dem Motor 114 um einen vierzylindrigen Verbrennungsmotor zum Antrieb des Fahrzeugs.

Der Motor 114 wird über den Hochtemperatur-Kühlkreislauf gekühlt. Ein Kühlmittel des Hochtemperatur-Kühlkreislaufs wird durch eine weitere Pumpe durch den Motor 114 bewegt. Nach Durchströmen des Motors 114 wird das Kühlmittel über einen Hochtemperatur-Kühler 122 oder über eine Umgehungsleitung zurück zu der Pumpe des Hochtemperatur-Kühlkreislaufs geführt.

Die Kühler 110, 122 werden über durchströmende Umgebungsluft des Fahrzeugs gekühlt. Die Umgebungsluft kann durch einen der Kühler 110, 122 gesaugt werden.

Das in Fig. 1 gezeigte Ausführurigsbeispiel ermöglicht eine bedarfsgerechte Bereitstellung von kaltem Niedertemperatur-Kühlmittel an den indirekten Ladeluftkühler 104 und den indirekten Kondensator 106. Das Ausführungsbeispiel basiert auf einer einfachen und effizienten Lösung mit einem austrittseitigen Thermostat 108 am Ladeluftkühler 104. Der Thermostat 108 kann indirekt oder indirekt und integriert ausgeführt sein. Der Thermostat 108 ist ausgebildet, um zu schließen wenn keine Ladeluftkühlung erforderlich ist, wie es bei Teillast und Leerlauf der Fall ist, und zu öffnen wenn die Ladeluft gekühlt werden soll. Das Thermostat 108, im Ladeluftkühler integriert oder direkt anschließend in der Kühlmittelleitung angebracht, ist dabei ausgebildet, um in Abhängigkeit von der Kühlmitteltemperatur zu reagieren. Regeltemperaturen liegen dabei zwischen 50°C und 80°C.

Für den indirekten Kondensator 106 bedeutet dies vollen Kühlmittelmassenstrom im Teillast- und Leerlaufbetrieb, also den Betriebsbedingungen in denen meist die maximale Kondensatorleistung anfällt (max: Kabinenabkühlung "cool down").

Das Thermostat 108 am Indirekten Ladeluftkühler 104 soll dem indirekten Kondensator 106 die maximale Kühlmittelmenge auf möglichst niedrigem Temperatumiveau zur Verfügung stellen. Hierfür ist auch die kaskadierte Ladeluftkühlung eine Option. In diesem Fall wird der Niedertemperatur-Kühlkreislauf grundsätzlich durch die Hochtemperatur-Ladeluftkühlung thermisch entlastet, was das Temperaturniveau absenkt.

Ein Thermostat am Austritt des indirekten Kondensators 106 Ist für Betriebsbedingungen ohne Klimaanlagenbetrieb sinnvoll.

Fig. 2 zeigt ein Wärmetauschersystem gemäß einem Ausführungsbeispiel der vorliegenden Erfindung. Das Wärmetauschersystem kann beispielsweise in dem in Fig. 1 gezeigten Niedertemperatur-Kreislauf eingesetzt werden.

Das Wärmetauschersystem umfasst einen Verteiler 102, einen Ladeluftkühler CAC 104, einen ersten indirekten Kondensator iCand1 206 und einen zweiten indirekten Kondensator iCond2 106. Der Ladeluftkühler 104 und der erste Kondensator 206 sind in Reihe geschaltet. Der zweite Kondensator 106 ist parallel zu dem Ladeluftkühler 104 und dem ersten Kondensator 206 geschaltet. Der Verteiler 102 ist ausgebildet, um einen Anteil eines in den Verteiler 102 strömenden Kühlmittels zu einem Eingang des Ladeluftkühlers 104 und einen übrigen Teil des Kühlmittels zu einem Eingang des zweiten Kondensators 106 zu führen. Der zu dem Ladeluftkühler 104 geführte Teil des Kühlmittels durchströmt nach Durchströmen des Ladeluftkühlers 104 den ersten Kondensator 206 und wird anschließend mit dem durch den zweiten Kondensator 106 geströmten Teil des Kühlmittels zusammengeführt.

Wie durch Pfeile gekennzeichnet, wird dem Ladeluftkühler 104 Ladeluft zugeführt, die nach durchströmen des Ladeluftkühlers 104 diesen wieder verlässt. Dem ersten Kondensator 206 wird ein Kältemittel zugeführt, dass zuerst den ersten Kondensator 206 und anschließend den zweiten Kondensator 106 durchströmt und dabei kondensiert. Nach Durchströmen des zweiten Kondensators 106 strömt das Kältemittel aus dem zweiten Kondensator 106 heraus.

Das in Fig. 2 gezeigte Ausführungsbeispiel ermöglicht eine bedarfsgerechte Bereitstellung von kaltem Niedertemperatur-Kühlmittel an den Ladeluftkühler 104 und den indirekten Kondensator 106, 206. Das Ausführungsbeispiel basiert auf einer Aufteilung des Kondensators 106,206 In zwei Einheiten, welche wie in Fig. 2 gezeigt miteinander verschaltet sind. In einem Kühlmittelpfad sind der Ladeluftkühler 104 und der erste Kondensator 206 in Serie geschaltet. In einem anderen parallelen Kühlmittelpfad ist der zweite Kondensator 106 angeordnet. Im Kondensator 106, 206, hier für den Fall eines Stapelscheibenkondensators, kann eine vorhandene kältemittelseitige Umlenkung als Trennung der Kühlmittelversorgung verwendet werden.

Diese Verschaltung ist dann sinnvoll, wenn der Ladeluftkühler 104 einen geringen Druckverlust Im Verhältnis zum Kondensator 106, 206 hat (min 1:3) und ansonsten der Kühlmittelpfad durch den Ladeluftkühler 104 inklusive Thermostat, wie anhand von Fig. 1 beschrieben, zusätzlich abgedrosselt werden müsste. Ein Thermostat Ist in dem in Fig. 2 gezeigten Ausführungsbeispiel nicht erforderlich. Das Kühlmittel kühlt entweder nur den ersten und den zweiten Kondensator 106, 206 oder zusätzlich mit der Vorlast des Ladeluftkühlers 104 den Kondensator 106, 206.

Als Kühlmittelregelung kann eine direkte Regelung des Kühlmittelstromes über die Bauteile Ladeluftkühler 104 und Kondensator 106, 206 entsprechend des Kühlleistungsbedarfes im Ladeluftkühler 104 über den Ladedruck erfolgen. Hierbei wird der Kühlmittel-Massenstrom mit einem Ventil oder Kennfeldthermostat geregelt, indem ein Ladedrucksensor zwischen Verdichter und Zylindereinlass den Ladedruck erfasst und damit die Kühlmittel-Massenstromaufteilung steuert. Eine weitere einfache Lösung hierfür kann über eine Überdruckdose, insbesondere eine pneumatische Überdruckdose, realisiert sein, die das Ventil im Kühlmittel-Pfad oder im indirekten Ladeluftkühler 104 direkt ansteuert.

Die beschriebenen Ausführungsbeispiele sind nur beispielhaft gewählt und können miteinander kombiniert werden.

### Bezugszeichenliste

- 102: Verteiler
- 104: Ladeluftkühler
- 106: Kondensator
- 108: Regler
- 110: Kühler
- 112: Pumpe
- 114: Motor
- 122: Kühler
- 206: Kondensator

## Patentansprüche

1. Wärmetauschersystem für ein Fahrzeug, mit folgenden Merkmalen:
einem Verteiler (102) zum Aufteilen eines Kühlmittelstroms in einen ersten Kühlmittelstrom und einen zweiten Kühlmittelstrom;
einem durch den ersten Kühlmittelstrom kühlbaren Ladeluftkühler (104) für einen Motor (114) des Fahrzeugs;
einem durch den zweiten Kühlmittelstrom kühlbaren Kondensator (106); und
einem Regler (108) zum Regeln eines Massenstroms des ersten Kühlmittelstroms durch den Ladeluftkühler.

2. Wärmetauschersystem gemäß Anspruch 1, bei dem der Regler (108) ausgebildet ist, um eine Temperatur des ersten Kühlmittelstroms ausgangsseitig des Ladeluftkühlers (104) zu erfassen und den Massenstrom des ersten Kühlmittelstroms durch den Ladeluftkühler abhängig von der Temperatur zu regeln.

3. Wärmetauschersystem gemäß Anspruch 2, bei dem der Regler (108) ausgebildet ist, um den Massenstrom des ersten Kühlmittelstroms bei einer steigenden Temperatur zu erhöhen.

4. Wärmetauschersystem gemäß einem der vorangegangenen Ansprüche, bei dem der Regler (108) ein Thermostat ist.

5. Wärmetauschersystem gemäß einem der vorangegangenen Ansprüche, bei dem der Regler (108) in dem Ladeluftkühler (104) integriert ist.

6. Wärmetauschersystem gemäß einem der vorangegangenen Ansprüche, mit einem von einem weiteren Kühlmittelstrom gekühlten Ladeluftkühler, der in Strömungsrichtung einer durch den Ladeluftkühler (104) und den weiteren Ladeluftkühler strömenden Ladeluft vor dem von dem ersten Kühlmittelstrom gekühlten Ladeluftkühler angeordnet ist.

7. Wärmetauschersystem gemäß einem der vorangegangenen Ansprüche, mit einem durch den ersten Kühlmittelstrom gekühlten weiteren Kondensator (206), der ausgangsseitig des Ladeluftkühlers angeordnet ist.

8. Wärmetauschersystem gemäß einem der vorangegangenen Ansprüche, bei dem der Regler (108) ausgebildet ist. um eine Information über einen Betriebszustand des Motors (114) zu empfangen und ausgebildet ist, um die Durchflussmenge des ersten Kühlmittels durch den Ladeluftkühler (104) bei einem Volllastbetrieb des Motors zu erhöhen und bei einem Teillastbetrieb oder einem Leerlauf des Motors zu senken.

9. Wärmetauschersystem gemäß einem der vorangegangenen Ansprüche, bei dem der Regler (108) ausgebildet ist, um den Massenstrom des ersten Kühlmittelstroms durch den Ladeluftkühler (104) abhängig von einem Ladedruck des Motors zu regeln.

10. Verfahren zum Betreiben eines Wärmetauschersystems für ein Fahrzeug, das die folgenden Schritte umfasst:
Aufteilen eines Kühlmittelstroms in einen ersten Kühlmittelstrom und einen zweiten Kühlmittelstrom;
Leiten des ersten Kühlmittelströms durch einen durch den ersten Kühlmittelstrom gekühlten Ladeluftkühler (104) für einen Motor (114) des Fahrzeugs;
Leiten des zweiten Kühlmittelstroms durch einen durch den zweiten Kühlmittelstrom gekühlten Kondensator (106); und
Regeln des ersten Kühlmittelstroms durch den Ladeluftkühler.
